Europäisches Patentamt

European Patent Office

Office européen des brevets

(19)

(11) Numéro de publication : **0 506 504 A1**

(12) **DEMANDE DE BREVET EUROPEEN**

(21) Numéro de dépôt : **92400641.4**

(22) Date de dépôt : **11.03.92**

(51) Int. Cl.⁵ : **G21C 17/108**

(30) Priorité : **29.03.91 FR 9103914**

(43) Date de publication de la demande :
**30.09.92 Bulletin 92/40**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Damezin, Jean**
**131 Avenue de Versailles**
**F-75016 Paris (FR)**
Inventeur : **Desfontaines, Guy**
**18 rue Jean Jaurès**
**F-92800 Puteaux (FR)**
Inventeur : **Millot, Jean-Paul**
**1 rue des Roitelets**
**F-78990 Elancourt (FR)**

(74) Mandataire : **Bouget, Lucien et al**
**Cabinet Lavoix 2, Place d'Estienne d'Orves**
**F-75441 Paris Cédex 09 (FR)**

(54) **Dispositif et procédé de mesure du flux neutronique dans le coeur d'un réacteur nucléaire.**

(57) Le dispositif comporte une sonde mobile qui peut être déplacée à l'intérieur de doigts de gant. Une pluralité de conduits (20) de passage et de maintien d'un doigt de gant sont disposés dans le cloisonnement (6) du réacteur, autour du coeur (4) suivant une direction axiale et substantiellement sur toute la hauteur du coeur. Les conduits (20) sont répartis circonférentiellement autour du coeur (4). Une pluralité de manchettes de traversée du couvercle de la cuve sont disposées chacune dans le prolongement axial d'un conduit (20) de passage d'un doigt de gant. Des colonnes de guidage disposées chacune dans le prolongement axial d'un conduit et engagées chacune dans une manchette de traversée du couvercle de la cuve constituent avec le conduit (20) et la manchette de traversée correspondants un canal de réception d'un doigt de gant. Des moyens de guidage, de déplacement, d'aiguillage et de parquage de la sonde mobile sont disposés à l'extérieur de la cuve (1) et fixés sur le couvercle de la cuve. Ces moyens comportent une pluralité de tubes de guidage reliés chacun à l'une de ses extrémités aux moyens de déplacement, de guidage et d'aiguillage de la sonde mobile et, à son autre extrémité à un doigt de gant. Le dispositif à sonde mobile permet d'effectuer un recalage de mesures de flux neutronique réalisées par un ensemble d'instrumentation fixe comportant en particulier des chambres externes à fission multi-étagées (40).

FIG.2

L'invention concerne un dispositif et un procédé de mesure du flux neutronique dans le coeur d'un réacteur nucléaire.

Les réacteurs nucléaires et en particulier les réacteurs nucléaires refroidis par de l'eau sous pression comportent une cuve de forme générale cylindrique ayant un axe vertical et renfermant le coeur du réacteur qui est constitué par des assemblages combustibles de forme prismatique juxtaposés et disposés verticalement. Un circuit primaire assure la circulation et le refroidissement de l'eau sous pression constituant le fluide primaire de refroidissement du réacteur nucléaire. Le circuit primaire comporte au moins une boucle et généralement trois ou quatre boucles qui sont en communication avec le volume interne de la cuve à leurs extrémités. Les assemblages combustibles du coeur sont disposés et maintenus dans un cloisonnement entourant le coeur à l'intérieur de la cuve. La cuve est fermée à sa partie supérieure par un couvercle démontable qui permet d'accéder, à l'intérieur de la cuve, par exemple pour assurer le rechargement du coeur en assemblages combustibles.

Les réacteurs nucléaires et en particulier les réacteurs nucléaires refroidis par de l'eau sous pression comportent des moyens de mesure permettant de connaître la valeur du flux neutronique dans le coeur du réacteur nucléaire et la répartition spatiale de ce flux neutronique, pendant le fonctionnement du réacteur.

Ces moyens de mesure comportent des détecteurs de divers types qui peuvent être introduits dans le coeur du réacteur nucléaire et qui constituent l'instrumentation interne du coeur.

Les détecteurs peuvent être constitués par exemple par des sondes à fission, des thermomètres gamma, des aéroballs ou des hydroballs. Ces détecteurs sont introduits dans un certain nombre d'assemblages combustibles, de façon à permettre une détermination de la distribution spatiale du flux à l'intérieur de l'ensemble du coeur.

Les détecteurs peuvent être présents en permanence dans le coeur et, dans ce cas, l'instrumentation est dite fixe ou, au contraire, ces détecteurs peuvent être introduits dans le coeur au moment de leur utilisation pour les mesures et l'instrumentation est alors dite mobile.

Dans le premier cas, les mesures de flux sont directement utilisées pour réaliser la surveillance du coeur.

Dans le second cas, la surveillance du coeur est effectuée grâce aux informations fournies par d'autres capteurs, par exemple, des chambres à fission multi-étagées disposées à l'extérieur du coeur et des dispositifs de détermination de la position des grappes de contrôle dans le coeur.

Dans ce dernier cas, l'instrumentation interne mobile du coeur a seulement pour fonction d'effectuer un recalage périodique des informations fournies par l'instrumentation externe ainsi que de détecter, avant le démarrage du réacteur, des erreurs éventuellement commises lors des opérations de chargement du combustible.

L'instrumentation interne du coeur comporte en outre des tubes ou doigts de gant qui servent à la protection et au guidage des détecteurs de mesure lors de leur déplacement depuis la salle de commande de l'instrumentation, jusqu'aux assemblages combustibles. Les doigts de gant traversent la paroi de la cuve du réacteur nucléaire, par l'intermédiaire de manchettes de traversée disposées en général dans la partie inférieure de la cuve ou sur le couvercle. Les doigts de gant doivent être retirés des assemblages combustibles, avant qu'on effectue le déchargement et le rechargement du réacteur en assemblages combustibles.

Dans la salle de commande de l'instrumentation, sont disposés des appareils de traitement des mesures fournies par les détecteurs et, lorsqu'il s'agit de détecteurs mobiles, des dispositifs pour assurer leur déplacement à l'intérieur des doigts de gant, dans le sens de l'introduction dans le coeur ou dans le sens de l'extraction du coeur.

L'instrumentation des réacteurs nucléaires, qu'elle soit fixe ou mobile, présente certains inconvénients.

Il est tout d'abord nécessaire de réserver une place importante dans le bâtiment du réacteur pour aménager un local destiné à recevoir les appareils de mesure et les dispositifs de commande de l'instrumentation et des voies de passage des doigts de gant depuis le local, jusqu'à la cuve du réacteur.

De plus, il est nécessaire de retirer les doigts de gant avant chacune des opérations de rechargement du coeur en assemblages combustibles, sur une longueur au moins égale à la hauteur du coeur, ce qui conduit à prévoir un dégagement suffisant dans la salle de commande dont le volume est encore accru, de ce fait.

Lorsque les manchettes de traversée de la paroi de la cuve permettant l'introduction des doigts de gant sont fixées sur le fond de la cuve, il existe un risque de fuite du fluide primaire contenu dans la cuve, dans le cas de rupture d'une ou plusieurs manchettes de traversée.

Dans le cas où l'instrumentation interne du coeur traverse la paroi de la cuve à sa partie supérieure constituée par le couvercle, les équipements internes supérieurs du réacteur peuvent présenter une structure relativement complexe et les durées d'intervention et les doses de rayonnement reçues par le personnel d'exploitation, lors des opérations d'extraction et de remise en place des doigts de gant, avant et après rechargement du coeur, peuvent être augmentées.

Le but de l'invention est donc de proposer un dispositif de mesure du flux neutronique dans le coeur d'un réacteur nucléaire comportant une cuve de forme générale cylindrique ayant un axe vertical et renfermant le coeur du réacteur, un circuit primaire de circulation du fluide de refroidissement du réacteur comportant au moins une boucle en communication avec le volume interne de la cuve, un cloisonnement entourant le coeur, à l'intérieur de la cuve et un couvercle fermant la cuve à sa partie supérieure, le dispositif de mesure comportant au moins une sonde de mesure du flux neutronique dans le coeur du réacteur mobile à l'intérieur d'au moins un doigt de gant, le dispositif de mesure ayant une structure simple ne nécessitant pas la présence d'une salle de commande de volume important et permettant de simplifier les conditions d'exploitation du réacteur nucléaire.

Dans ce but, le dispositif de mesure selon l'invention comporte de plus :

– une pluralité de conduits de passage et de maintien d'un doigt de gant disposés dans le cloisonnement du coeur suivant une direction axiale et substantiellement sur toute la hauteur du coeur, répartis circonférentiellement autour du coeur,

– une pluralité de manchettes de traversée du couvercle de la cuve disposées chacune dans le prolongement axial d'un conduit de passage d'un doigt de gant,

– des colonnes de guidage disposées chacune dans le prolongement axial d'un conduit et engagées chacune dans une manchette de traversée pour constituer, avec le conduit et la manchette correspondants, un canal de réception d'un doigt de gant,

– et des moyens de guidage, de déplacement, d'aiguillage et de parquage de la sonde mobile disposés à l'extérieur de la cuve et fixés sur le couvercle de la cuve comportant une pluralité de tubes de guidage reliés chacun, à l'une de ses extrémités, aux moyens de déplacement de guidage et d'aiguillage de la sonde mobile et, à son autre extrémité, à un doigt de gant.

L'invention est également relative à un procédé de mesure du flux neutronique dans le coeur du réacteur nucléaire utilisant le dispositif de mesure à sonde mobile pour effectuer une vérification et un recalage de mesures effectuées par un dispositif d'instrumentation fixe.

Afin de bien faire comprendre l'invention, on va maintenant décrire, à titre d'exemple non limitatif, en se référant aux figures jointes en annexe, un dispositif de mesure suivant l'invention et son utilisation dans un procédé de mesure mettant en oeuvre un dispositif d'instrumentation fixe.

La figure 1 est une vue en coupe par un plan vertical de la cuve d'un réacteur nucléaire à eau sous pression comportant des éléments d'un dispositif de mesure suivant l'invention.

La figure 2 est une vue en coupe suivant 2-2 de la figure 1.

La figure 3 est une vue partielle en coupe par un plan vertical de la partie supérieure d'une manchette de traversée du couvercle de la cuve.

La figure 4 est une vue en élévation des structures du réacteur disposées au-dessus du couvercle de la cuve et d'une partie du dispositif de mesure.

La figure 5 est une vue latérale suivant 5 de la figure 4.

La figure 6 est une vue en coupe par un plan vertical d'une partie du dispositif de mesure placée au-dessus du couvercle de la cuve.

La figure 7 est une vue de dessus suivant 7 de la figure 6.

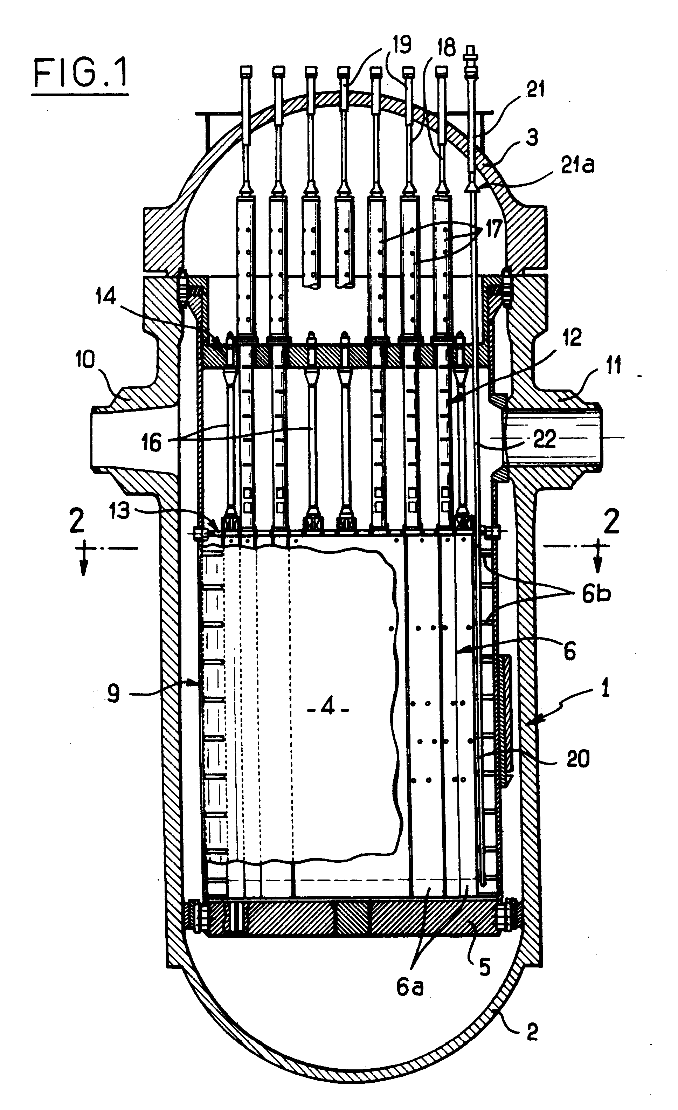

Sur la figure 1, on voit la cuve 1 d'un réacteur nucléaire à eau sous pression de forme cylindrique disposée avec son axe vertical et fermée à sa partie inférieure par un fond bombé 2 et à sa partie supérieure par un couvercle 3 également de forme bombée.

Le coeur 4 du réacteur nucléaire constitué par des assemblages combustibles reposant par leur partie inférieure sur une plaque support de coeur 5 est entouré par un cloisonnement 6 constitué par des plaques planes verticales 6a assemblées entre elles de manière à épouser la forme de la surface extérieure du coeur, sur lesquelles sont fixées des plaques de renfort 6b horizontales intercalées entre les plaques 6a et la surface interne d'une enveloppe de coeur 9 fixée à l'intérieur de la cuve 1, dans une disposition coaxiale par rapport à cette cuve.

La cuve 1 comporte également des tubulures telles que 10 et 11 débouchant dans le volume interne de la cuve, au-dessus du coeur 4. Les tubulures telles que 10 et 11 permettent le raccordement des parties d'extrémité des boucles du circuit primaire dans lesquelles circule le fluide de refroidissement du réacteur.

Au-dessus du coeur 4 sont disposés les équipements internes supérieurs 12 du réacteur qui sont constitués par la plaque supérieure de coeur 13, une plaque support 14 placée parallèlement à la plaque supérieure de coeur 13 et reliée à celle-ci par des colonnes-entretoises 16 ainsi qu'un ensemble de tubes de guidage en deux parties 17 disposés entre les plaques 13 et 14 et au-dessus de la plaque 14, à l'aplomb de certains assemblages du coeur 4.

Les tubes 17 assurent le guidage de grappes absorbantes de commande du réacteur qui sont fixées à des prolongateurs 18 et qui peuvent être introduits dans certains assemblages du coeur, sur une partie au moins de la hauteur du coeur, pour régler sa réactivité.

Le dispositif de mesure de flux neutronique à sonde mobile suivant l'invention comporte des conduits de guidage verticaux tels que le conduit 20 qui sont introduits dans des ouvertures alignées traversant les plaques de renfort successives 6b du cloisonnement 6.

Les conduits de guidage 20 qui sont disposés dans la direction verticale, c'est-à-dire dans une direction parallèle à l'axe de la cuve et à l'axe du coeur 4 occupent pratiquement toute la hauteur du coeur 4 et permettent de réaliser le guidage du doigt de gant 25 d'une sonde mobile suivant la direction axiale du coeur et sensiblement suivant toute sa hauteur.

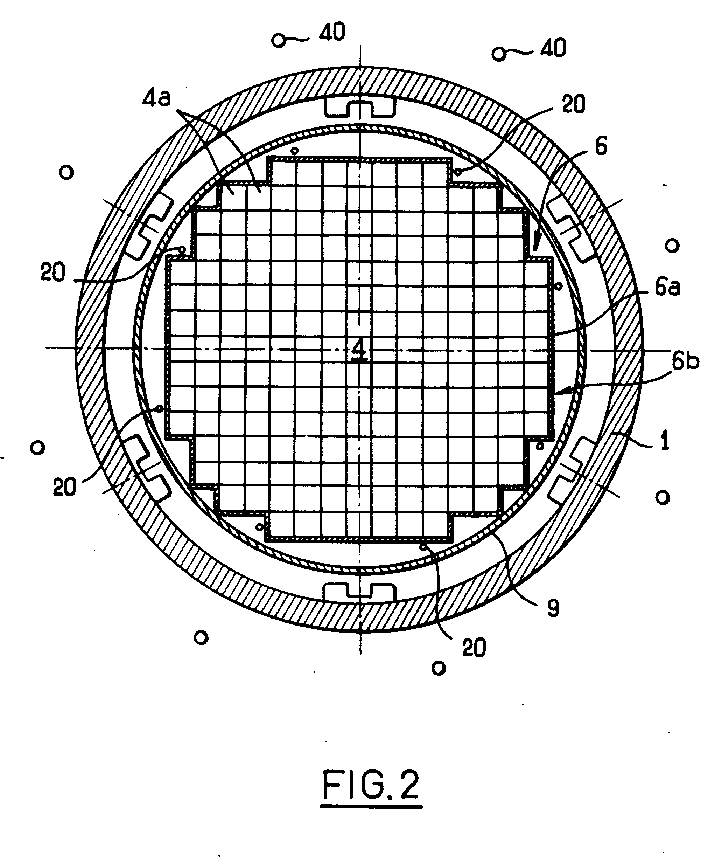

Comme il est visible sur la figure 2, huit conduits de guidage 20 sont placés autour du coeur 4 constitué par des assemblages combustibles 4a, dans des positions placées à 45° les unes des autres autour de l'axe du coeur 4.

Le déplacement d'une sonde mobile successivement à l'intérieur des doigts de gant 25 introduits dans chacun des conduits de guidage 20, suivant toute la hauteur du coeur 4, permet de déterminer la répartition spatiale du flux neutronique émis par le coeur 4, dans la direction axiale du coeur et dans une direction circonférentielle.

Les prolongateurs 18 auxquels sont fixées les grappes absorbantes sont guidés par des manchettes 19 ou adaptateurs traversant le couvercle de la cuve 3, comme il est visible sur la figure 1.

Certains des adaptateurs tels que l'adaptateur 21 traversant le couvercle de cuve 3 dans la direction verticale constituent des manchettes de traversée permettant le passage de la sonde mobile de mesure de flux neutronique à l'intérieur de la cuve 1.

La manchette de traversée 21 représentée sur la figure 1 est placée dans le prolongement axial du conduit de guidage 20 disposé dans le cloisonnement 6.

La manchette 21 comporte une partie d'extrémité inférieure 21a élargie en forme de tronc-de-cône permettant de faciliter l'engagement d'une colonne creuse de guidage 22, lors de la pose du couvercle, à l'intérieur de la manchette 21. La colonne creuse de guidage 22 assure un passage continu du doigt de gant de la sonde mobile entre la partie externe de la manchette 21 et la partie d'extrémité supérieure du conduit de guidage 20, cette colonne 22 étant placée dans le prolongement axial du conduit 20 et engagée par sa partie supérieure dans la manchette 21.

Il est bien évident que huit manchettes de traversée du couvercle 3 analogues à la manchette 21 sont disposées dans le prolongement axial des huit conduits de guidage 20 disposés dans le cloisonnement 6.

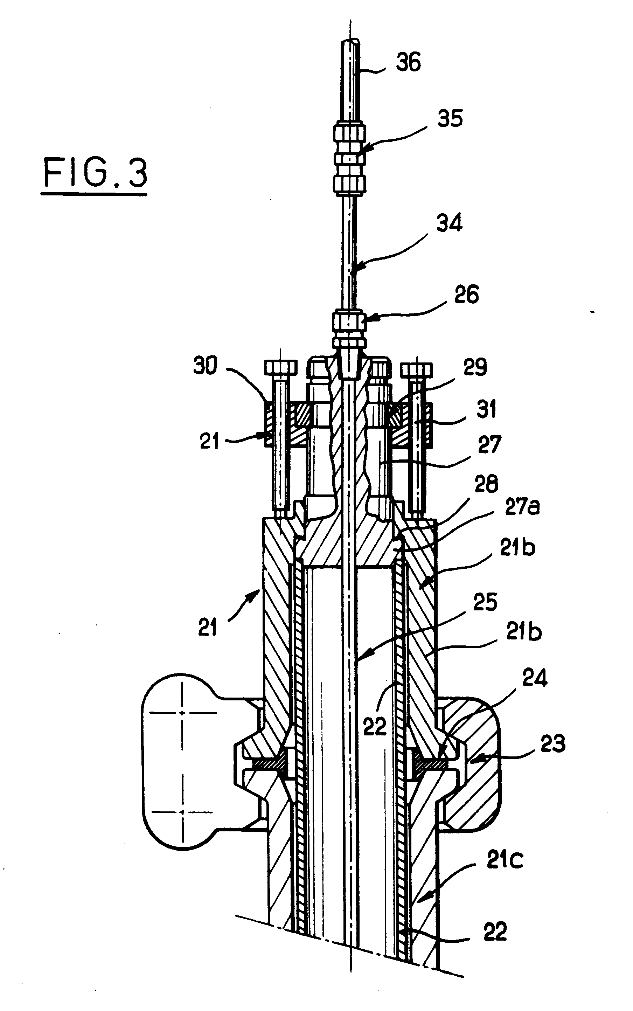

Comme il est visible sur la figure 3, la partie supérieure de la manchette de traversée 21 est constituée de deux parties 21b et 21c assemblées dans le prolongement axial l'une de l'autre par une bride 23. Un joint d'étanchéité métallique 24 est intercalé entre les parties 21b et 21c, le serrage du joint étant assuré par la bride 23.

Un doigt de gant 25 est introduit axialement dans la manchette 21, la colonne 22 et le conduit de guidage 20, suivant toute leur longueur et fixé sur la partie supérieure de la manchette 21.

La sonde mobile du dispositif de mesure suivant l'invention est déplacée à l'intérieur du doigt de gant 25 qui assure son déplacement axial à l'intérieur de la manchette 21, de la colonne 22 et du conduit de guidage 20.

Le doigt de gant 25 est fixé par l'intermédiaire d'un raccord 26 sur une pièce 27 de fermeture de l'extrémité supérieure de la manchette 21, comportant un canal central de passage du doigt de gant 25. Le raccord 26 est soudé sur la pièce 27 qui comporte une partie élargie 27a engagée dans une gorge usinée dans l'alésage intérieur de la partie 21b de la manchette 21. Un joint d'étanchéité métallique 28 est intercalé entre la surface supérieure de la partie élargie 27a et la gorge.

La pièce 27 comporte une gorge sur sa surface externe dans laquelle est engagé un jonc annulaire 29 comportant deux parties séparées par une surface de raccordement située dans un plan diamétral du jonc annulaire 29.

Une bague de serrage 30 traversée par des vis 31 comporte un évidement interne dans lequel est placé le jonc 29.

La colonne 22 engagée dans la manchette 21 suivant toute sa longueur est solidaire, à sa partie supérieure, de la pièce 27 assurant la fermeture de la partie supérieure de la manchette 21.

Le doigt de gant 25 est relié par l'intermédiaire du raccord 26, d'un tronçon intermédiaire 34 et d'un raccord vissé 35, à un tube de guidage 36 de la sonde mobile, à l'extérieur de la cuve du réacteur, audessus du couvercle 3.

Le doigt de gant 25 fixé à la pièce 27 constituant la partie supérieure de fermeture de la manchette 21 est disposé à l'intérieur d'un canal vertical constitué par l'alésage interne de la pièce 27, l'alésage interne de la colonne 22 et le conduit de passage 20 disposé dans le cloisonnement. Le doigt de gant 25 constituant le moyen de guidage d'une sonde mobile de mesure de flux neutronique est disposé suivant toute la hauteur du canal vertical de passage, de sorte que la sonde peut être introduite dans le cloisonnement et déplacée suivant toute la hauteur du coeur 4 du réacteur.

Le doigt de gant peut être facilement démonté, par exemple pour assurer son remplacement, lorsque le réacteur est à l'arrêt. Le tronçon intermédiaire 34 est désolidarisé du tube de guidage 36 par dévissage du raccord 35 et la soudure de fixation du raccord 26 sur la pièce 27 est éliminée. Le doigt de gant 25 est extrait de son canal de réception vertical par traction sur le tronçon intermédiaire 34 disposé à l'extérieur de la manchette 21.

Lors du démontage du couvercle de la cuve, par exemple pour effectuer un rechargement du coeur du réacteur en assemblages combustibles, le doigt de gant 25 et l'ensemble des moyens de guidage et de maintien de ce doigt de gant dans la cuve constitués par la pièce 27, la colonne 22 et le conduit 20, peuvent être maintenus dans la cuve, dans leur position de service. On évite ainsi une opération d'extraction des doigts de gant dont la longueur est importante et qui peuvent subir pendant leur extraction ou leur remise en place, des détériorations sous l'effet des efforts mécaniques nécessaires pour leur déplacement.

Avant d'effectuer le démontage du couvercle 3 de la cuve, on désolidarise les tronçons intermédiaires 34 prolongeant les doigts de gant, par dévissage des raccords 35.

La pièce 27 de fermeture de la manchette 21 est maintenue en position de serrage par les vis 31 venant en appui sur la surface supérieure de la partie 21b de la manchette 21 et assurant par l'intermédiaire de la bague 30 et du jonc 29 le soulèvement de la pièce 27, de sorte que le joint d'étanchéité 28 se trouve serré à l'intérieur de la manchette 21.

Préalablement au démontage du couvercle de la cuve, on desserre les vis 31, de sorte que le jonc en deux parties 29 puisse être démonté. Le démontage du jonc 29 permet de désolidariser la manchette 21 de la pièce 27 et de la colonne 22.

On réalise alors le démontage de la bride 23 et on sépare les parties 21b et 21c de la manchette 21.

Lorsque ces opérations de démontage ont été effectuées sur chacune des manchettes 21, il est possible de soulever le couvercle 3 de la cuve en laissant en place les colonnes 22, les pièces 27 et les doigts de gant 25.

Lors de la remise en place du couvercle de la cuve, les pièces 27 et les colonnes 22 viennent s'engager dans les manchettes 21 correspondantes dont les parties inférieures évasées 21a permettent de faciliter l'engagement de la pièce 27.

Les éléments de serrage et d'étanchéité de la pièce 27 sont remis en place et la fermeture étanche de la manchette 21 est assurée par serrage des vis 31.

Comme il est visible sur la figure 2, les chambres externes de mesure de flux neutronique 40 sont disposées autour de la cuve 1, dans des positions régulièrement espacées à la périphérie de la cuve. Les chambres de mesure 40 sont des chambres à fission multiétagées permettant de déterminer la répartition du flux neutronique émis par le coeur du réacteur, dans sa direction axiale.

On utilise huit chambres multiétagées 40 disposées à 45° les unes par rapport aux autres autour de l'axe du coeur 4 et de la cuve 1 du réacteur.

Les huit conduits 20 dans lesquels sont disposés les doigts de gant 25 de guidage de la sonde mobile de mesure de flux sont placés dans des dispositions alignées radialement par rapport aux positions des chambres multi-étagées 40.

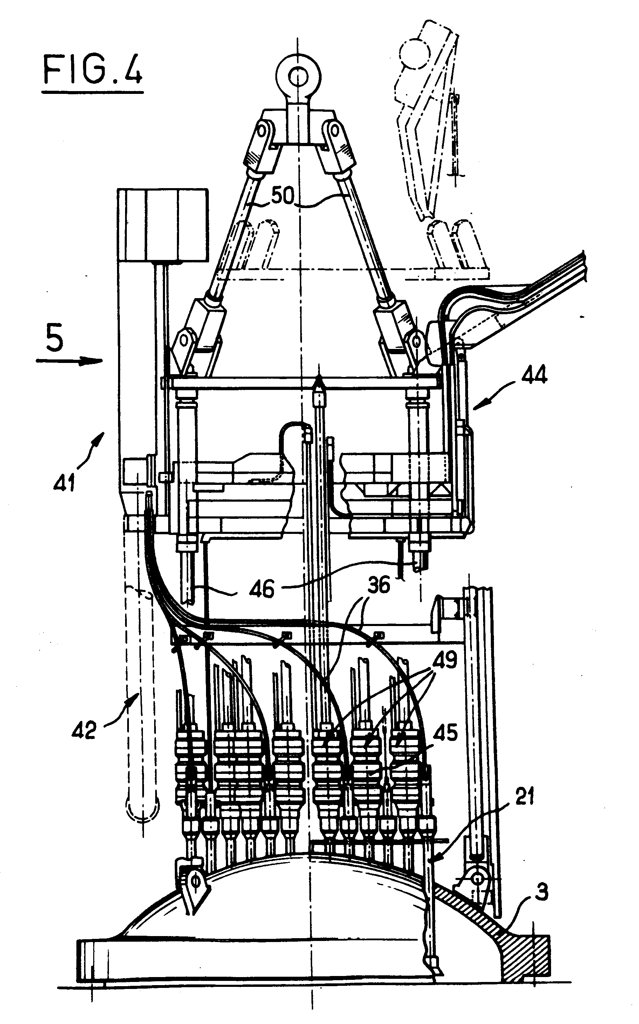

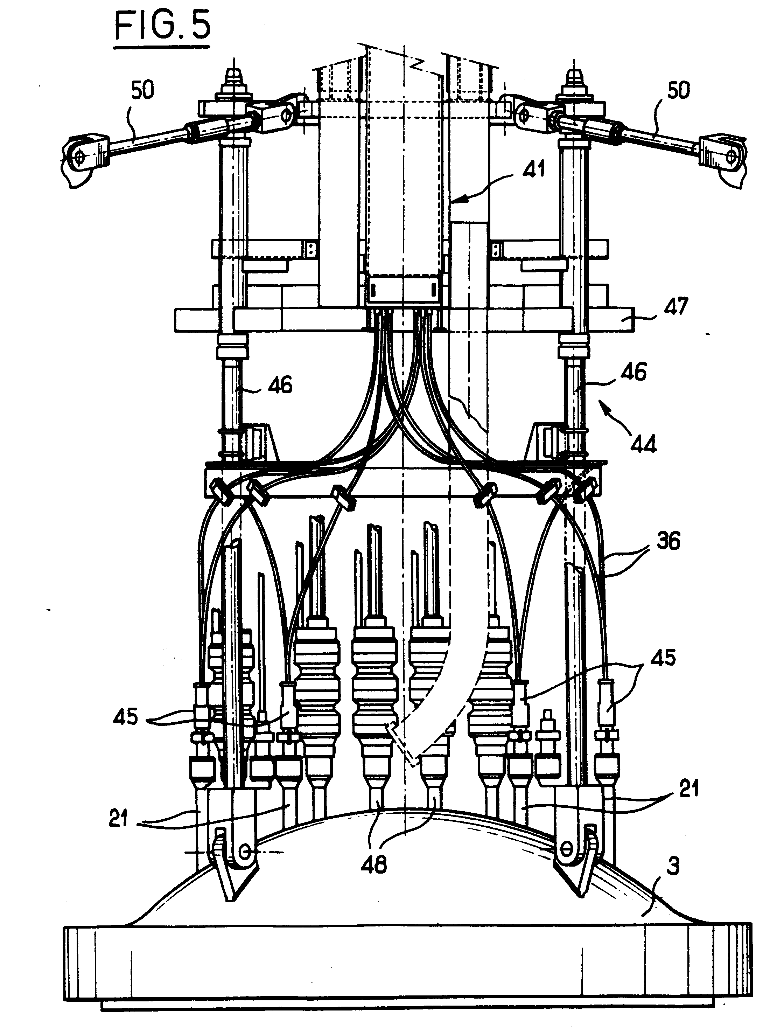

Comme il est visible sur les figures 4 et 5, les tubes souples 36 de guidage de la sonde mobile sont reliés à l'une de leurs extrémités à un boîtier de commande 41 renfermant des moyens de déplacement, des moyens de guidage et des moyens d'aiguillage de la sonde mobile et à leur autre extrémité, aux tronçons intermédiaires 34 de raccordement aux doigts de gant 25.

En réalité, comme il sera expliqué plus loin, on utilise deux sondes mobiles dont l'une constitue une sonde de remplacement, en cas de défaillance de la sonde utilisée pour les mesures dans chacun des doigts de gant 25.

Un étui de parquage 42 des sondes de mesure est disposé dans le prolongement du boîtier 41. Le boîtier 42 comporte une paroi absorbant les radiations permettant de protéger les opérateurs, lors de manipulations effectuées sur les sondes.

Les tronçons intermédiaires 34, les raccords 26 et 35 et la partie supérieure des manchettes 21 comportant les moyens de serrage des pièces de fermeture 27 sont placés à l'intérieur de boîtiers de protection 45.

Le boîtier 41 et les tubes de guidage 36 sont portés par une structure 44 fixée sur le couvercle 3 de la cuve. La structure 44 est constituée par les colonnes de levage 46 du couvercle de cuve 3 et des éléments de support transversaux 47 reliés aux colonnes 46.

Le couvercle 3 est traversé par des adaptateurs 48 assurant le passage et le guidage de prolongateurs à l'extrémité desquels sont fixées les grappes absorbantes de commande du réacteur nucléaire. Des mécanismes 49 de déplacement des grappes sont fixés sur les adaptateurs 48 au-dessus du couvercle de la cuve.

Les manchettes 21 sont constituées par huit adaptateurs analogues aux adaptateurs 48 qui ne sont pas utilisés pour le passage des prolongateurs de grappes de commande.

La structure 44 et le boîtier 41 sont maintenus par des tirants articulés 50 fixés à l'une de leurs extrémités sur la structure du réacteur nucléaire.

Les tirants 50 sont fixés de manière démontable, de manière à assurer la séparation du couvercle de la cuve de la structure du réacteur, avant le démontage du couvercle 3.

L'ensemble des éléments du dispositif de mesure suivant l'invention disposé à l'extérieur de la cuve est donc fixé sur le couvercle de la cuve.

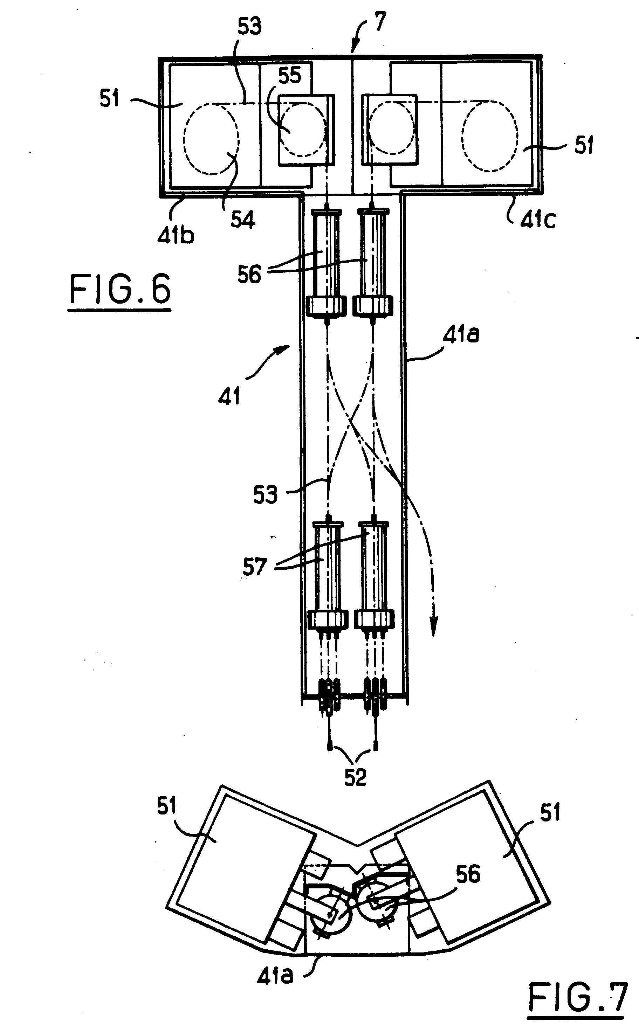

Comme il est visible sur les figures 6 et 7, le boîtier 41 comporte un corps vertical 41a et deux éléments de boîtier supérieurs 41b et 41c utilisés chacun pour assurer le déplacement d'une sonde mobile.

A l'intérieur de chacun des éléments de boîtier supérieurs 41b et 41c, est disposée une unité de commande et de déplacement 51 d'une sonde mobile.

La sonde mobile 52 est fixée à l'extrémité d'un câble 53 assurant sa propulsion et la transmission des signaux de mesure de la sonde.

L'unité de commande 51 comporte un enrouleur 54 et une poulie de propulsion motorisée 55.

Dans la partie 41a du boîtier 41 sont disposés, sur chacune des lignes de passage d'une sonde 52 fixée à un câble 53, un premier sélecteur rotatif à trois voies 56 et un second sélecteur rotatif à quatre voies 57.

Les sélecteurs rotatifs 56 et 57 peuvent être commandés pour assurer le passage de la sonde 52, soit en direction de l'un des huit tubes de guidage 36 reliés à l'un des huit doigts de gant 25 introduits dans le cloisonnement du coeur du réacteur, soit en direction de l'étui de parquage 42.

En utilisant les unités de commande 51 et les sélecteurs 56 et 57, il est donc possible d'effectuer avec la même sonde successivement les mesures de flux neutronique à l'intérieur de chacun des doigts de gant 25 et suivant toute la hauteur du coeur. Il est également possible, en cas de défaillance d'une sonde, de replacer la sonde défectueuse dans l'étui de parquage et d'extraire la sonde de remplacement qui peut être dirigée vers un doigt de gant 25.

Le dispositif à sonde mobile suivant l'invention est utilisé pour effectuer un contrôle et un recalage des mesures de flux effectuées en utilisant l'instrumentation fixe du réacteur.

Cette instrumentation fixe comporte les huit chambres externes à fission multi-étagées 40 réparties autour de la cuve 1 du réacteur qui permettent de connaître la distribution axiale du flux dans le coeur 4 du réacteur et un ensemble de moyens complémentaires qui seront décrits ci-dessous.

L'instrumentation fixe comporte de plus soixante thermocouples installés dans les équipements internes supérieurs du réacteur, c'est-à-dire à l'intérieur de la cuve au-dessus du coeur. Les thermocouples sont répartis dans la section transversale du coeur, de manière à permettre de mesurer la température du fluide de refroidissement du réacteur à la sortie du coeur et de déterminer la distribution radiale de la puissance dans le coeur 4. L'instrumentation fixe comporte également des dispositifs de mesure de la position des grappes de commande absorbantes dans le coeur 4 du réacteur, ces dispositifs étant constitués par des compteurs de pas associés aux prolongateurs auxquels sont fixées les grappes absorbantes. Les prolongateurs comportent en effet une denture coopérant avec des cliquets des mécanismes 49 de déplacement des grappes absorbantes dont on peut déterminer la position en comptant le nombre de pas dans le sens de l'extraction et dans le sens de l'engagement dans le coeur, effectués par les prolongateurs. L'instrumentation comporte également des sondes de mesure de la température à l'entrée et à la sortie de chacune des boucles primaires, c'est-à-dire aux extrémités de ces boucles primaires en communication avec le volume interne de la cuve.

L'instrumentation comporte en outre des capteurs de pression permettant de mesurer la pression du fluide de refroidissement primaire du réacteur et des débitmètres permettant de mesurer le débit de fluide de refroidissement circulant dans chacune des boucles du circuit primaire.

Pour déterminer la distribution instantanée du flux ou de la puissance dans le coeur du réacteur, on effectue les opérations suivantes :

– on mesure le flux neutronique émis par le coeur du réacteur, à l'extérieur de la cuve, en différents emplacements répartis autour de la cuve et espacés suivant la direction axiale de la cuve, en utilisant les chambres multi-étagées 40,

– on mesure la température du fluide primaire dans des emplacements situés au-dessus du coeur et répartis suivant la section transversale du coeur en utilisant les thermocouples,

– on mesure la position des grappes de commande dans le coeur du réacteur, en utilisant les compteurs de pas,

– on mesure la température du fluide primaire aux extrémités de chacune des boucles primaires en communication avec la cuve du réacteur,

– on mesure la pression du fluide primaire,

– on mesure le débit du fluide primaire circulant dans chacune des boucles primaires,

– et on calcule à partir des mesures effectuées, la distribution spatiale du flux neutronique dans le coeur du réacteur.

Pour calculer la distribution spatiale du flux neutronique ou de la puissance dans le coeur du réacteur à partir des mesures, on utilise un calculateur recevant les signaux de mesure sous forme numérisée et utilisant un code de calcul tridimensionnel.

Il est à remarquer que l'ensemble de l'instrumentation fixe est disposé à l'extérieur du coeur du réacteur, ce qui permet de simplifier considérablement les opérations de maintenance du réacteur nucléaire et en particulier les opérations de déchargement et de rechargement du combustible.

Cependant, pour que la distribution du flux dans le coeur, reconstituée par calcul à l'aide de l'instrumentation fixe, soit connue avec une bonne précision, il est nécessaire de s'assurer que les différents capteurs fournissent des indications qui ne se modifient pas au cours du temps.

On effectue donc périodiquement un recalage des valeurs du flux obtenues à partir de l'instrumentation fixe, en utilisant le dispositif à sonde mobile qui a été décrit plus haut.

Les mesures directes de flux sont réalisées par la sonde mobile, dans des emplacements situés à proximité du coeur, à l'intérieur du cloisonnement, si bien que ces mesures permettent d'effectuer certaines corrections et certains recalages des mesures effectuées par l'instrumentation fixe.

Le dispositif de mesure de flux neutronique suivant l'invention présente l'avantage de ne comporter aucun élément qui doive être introduit dans les assemblages combustibles du coeur du réacteur, pour effectuer les mesures.

Le dispositif de mesure à sonde mobile permettant d'effectuer les recalages périodiques comporte des éléments de guidage et de positionnement disposés dans le cloisonnement du coeur du réacteur et un ensemble de moyens disposé à l'extérieur de la cuve du réacteur et porté par le couvercle de la cuve.

Ce dispositif ne nécessite que des démontages simples avant qu'on effectue le démontage et le levage du couvercle de la cuve avant un rechargement en combustible.

Il n'est pas nécessaire de disposer d'un local d'instrumentation de grand volume à l'intérieur du bâtiment du réacteur, lorsqu'on utilise le dispositif et le procédé de mesure suivant l'invention.

Les avantages du dispositif et du procédé suivant l'invention sont obtenus en particulier par le fait que les moyens utilisés pour les mesures, aussi bien en ce qui concerne le dispositif à sonde mobile que le dispositif d'instrumentation fixe sont disposés à l'extérieur du coeur du réacteur constitué par les assemblages combustibles.

L'invention ne se limite pas au mode de réalisation qui a été décrit.

C'est ainsi que le dispositif de mesure de flux neutronique à sonde mobile peut présenter une structure différente de celle qui a été décrite. Ce dispositif peut comporter une seule sonde mobile, sans qu'il soit nécessaire de prévoir une sonde de remplacement.

On peut utiliser d'autres moyens qu'une sonde comme instrumentation mobile pour mesurer le flux, tel que des thermomètres $\gamma$, des aéroballs ou des hydroballs.

On peut utiliser un nombre quelconque de doigts de gant répartis autour de l'axe du coeur, pour assurer le guidage de la sonde mobile.

Les conduits de passage et de maintien des doigts de gant peuvent être disposés dans une partie quelconque du cloisonnement du coeur.

Les moyens de déplacement, de guidage et d'aiguillage des sondes peuvent être différents des moyens décrits ci-dessus.

L'instrumentation fixe du coeur peut être différente de celle qui a été décrite et comporter par exemple un nombre de chambres à fission multi-étagées différent de huit.

Les moyens de mesure du dispositif d'instrumentation fixe qui sont connus et utilisés séparément les uns des autres dans des dispositifs d'instrumentation suivant l'art antérieur peuvent être d'un type quelconque.

Enfin, le dispositif et le procédé suivant l'invention peuvent être utilisés dans le cas de tout réacteur nucléaire comportant un coeur disposé dans une cuve fermée par un couvercle à sa partie supérieure et entourée par une structure de maintien analogue à un cloisonnement.

## Revendications

**1.-** Dispositif de mesure du flux neutronique dans le coeur (4) d'un réacteur nucléaire comportant une cuve (1) de forme générale cylindrique ayant un axe vertical et renfermant le coeur (4) du réacteur, un circuit primaire de circulation du fluide de refroidissement du réacteur comportant au moins une boucle en communication avec le volume interne de la cuve, un cloisonnement (6) entourant le coeur, à l'intérieur de la cuve (1) et un couvercle (3) fermant la cuve (1) à sa partie supérieure, le dispositif de mesure comportant au moins une sonde (52) de mesure du flux neutronique dans le coeur (4) du réacteur, mobile à l'intérieur d'au moins un doigt de gant (25), caractérisé par le fait qu'il comporte de plus :

– une pluralité de conduits (20) de passage et de maintien d'un doigt de gant (25) disposés dans le cloisonnement (6) du coeur suivant une direction axiale et substantiellement sur toute la hauteur du coeur (4), répartis circonférentiellement autour du coeur (4),

– une pluralité de manchettes de traversée (21) du couvercle (3) de la cuve disposées chacune dans le prolongement axial d'un conduit (20) de passage d'un doigt de gant (25),

– des colonnes de guidage (22) disposées chacune dans le prolongement axial d'un conduit (20) et engagées chacune dans une manchette de traversée (21), pour constituer, avec le conduit (20) et la manchette (21) correspondants, un canal de réception d'un doigt de gant (25),

– et des moyens de guidage de déplacement, d'aiguillage et de parquage (41, 42, 51, 56, 57) de la sonde mobile (52) disposés à l'extérieur de la cuve (1) et fixés sur le couvercle (3) de la cuve comportant une pluralité de tubes de guidage (36) reliés chacun à l'une de ses extrémités aux moyens de déplacement, de guidage et d'aiguillage (51, 56, 57) de la sonde mobile (52) et à son autre extrémité à un doigt de gant (25).

**2.-** Dispositif suivant la revendication 1, caractérisé par le fait que les moyens de guidage, de déplacement et d'aiguillage (51, 55, 56, 57) de la sonde mobile (52) sont disposés à l'intérieur d'un boîtier (41) fixé sur le couvercle (3) de la cuve (1).

**3.-** Dispositif suivant la revendication 2, caractérisé par le fait que le moyen de parquage de la sonde mobile (52) est constitué par un étui solidaire du boîtier (41) et comportant une paroi de protection biologique.

**4.-** Dispositif suivant l'une quelconque des revendications 1 à 3, caractérisé par le fait qu'il comporte deux sondes mobiles (52) dont l'une constitue une sonde de mesure et l'autre une sonde de remplacement, dans le cas d'une défaillance de la sonde de mesure.

**5.-** Dispositif suivant la revendication 4, caractérisé par le fait que les moyens d'aiguillage (56, 57) des sondes mobiles (52) sont constituées par des sélecteurs rotatifs permettant de diriger les sondes (52), soit vers l'un quelconque des doigts de gant (25), soit vers le moyen de parquage (42) des sondes mobiles.

6.- Dispositif suivant l'une quelconque des revendications 1 à 5, caractérisé par le fait que chacun des doigts de gant (25) est fixé sur une pièce d'extrémité supérieure (27) de fermeture de la manchette (21) et relié, par l'intermédiaire d'un tronçon intermédiaire (34) et d'un raccord vissé (35) à un tube de guidage (36).

7.- Dispositif suivant la revendication 6, caractérisé par le fait que la colonne (22) engagée dans la manchette (21) est solidaire de la pièce d'extrémité (27) de fermeture de la manchette (21) et que la pièce de fermeture (27) est fixée de manière étanche et démontable à l'extrémité extérieure de la manchette (21).

8.- Dispositif suivant la revendication 7, caractérisé par le fait que la manchette (21) comporte, à l'extérieur de la cuve (1), au-dessus du couvercle (3), deux parties successives dans la direction axiale (21a et 21b) reliées entre elles de manière étanche par l'intermédiaire d'une bride démontable (23) et d'un joint d'étanchéité (24).

9.- Procédé de mesure du flux neutronique dans le coeur (4) d'un réacteur nucléaire comportant une cuve (1) de forme cylindrique ayant un axe vertical renfermant le coeur (4) du réacteur, un cloisonnement (6) entourant le coeur (4), à l'intérieur de la cuve (1), un couvercle (3) fermant la cuve (1) à sa partie supérieure, des manchettes tubulaires (21, 48) traversant le couvercle (3) de la cuve (1), des tiges de commande montées dans une partie au moins des manchettes (48) pour être guidées dans ces manchettes et assurer le déplacement dans le coeur (4) du réacteur de grappes absorbantes de commande, fixées aux tiges de commande, pour le contrôle de la réactivité du coeur (4) et au moins une boucle primaire reliée à la cuve (1) dans laquelle circule du fluide de refroidissement primaire du réacteur, caractérisé par le fait :

    – qu'on mesure le flux neutronique émis par le coeur (4) du réacteur, à l'extérieur de la cuve (1), en différents emplacements répartis autour de la cuve et espacés suivant la direction axiale de la cuve (1),

    – qu'on mesure la température du fluide primaire dans des emplacements situés au-dessus du coeur (4) et répartis suivant la section transversale du coeur,

    – qu'on mesure la position des grappes de commande dans le coeur (4) du réacteur,

    – qu'on mesure la température du fluide primaire aux extrémités de chacune des boucles primaires en communication avec la cuve (1) du réacteur,

    – qu'on mesure la pression du fluide primaire,

    – qu'on mesure le débit du fluide primaire circulant dans chacune des boucles primaires,

    – et qu'on calcule à partir des mesures effectuées, la distribution spatiale du flux neutronique dans le coeur du réacteur.

10.- Procédé de mesure suivant la revendication 1, caractérisé par le fait qu'on effectue un recalage des valeurs de la distribution spatiale du flux neutronique dans le coeur (4) du réacteur en utilisant un dispositif de mesure à sonde mobile suivant l'une quelconque des revendications 1 à 8.

11.- Dispositif de mesure du flux neutronique dans le coeur (4) d'un réacteur nucléaire mettant en oeuvre le procédé suivant l'une quelconque des revendications 9 et 10, caractérisé par le fait qu'il comporte :

    – au moins quatre chambres externes à fission multiétagées (40) réparties autour de l'axe vertical du coeur (4),

    – une pluralité de thermocouples disposés dans les structures internes supérieures du réacteur, au-dessus du coeur (4), dans des positions réparties autour de l'axe du coeur (4),

    – des compteurs de pas pour la détermination de la position des grappes de commande dans le coeur (4),

    – au moins deux sondes de température associées à chacune des boucles primaires pour la mesure de la température du fluide primaire à l'entrée et à la sortie de la boucle,

    – au moins un capteur de pression pour la détermination de la pression du fluide primaire,

    – et au moins un débitmètre dans chacune des boucles primaires, pour la mesure du débit du fluide primaire.

12.- Dispositif suivant la revendication 11, caractérisé par le fait qu'il comporte de plus un dispositif à sonde mobile suivant l'une quelconque des revendications 1 à 8.

FIG.1

FIG.2

# FIG.3

# FIG.4

# FIG.5

FIG.6

FIG.7

Office européen
des brevets

**RAPPORT DE RECHERCHE EUROPEENNE**

Numero de la demande

EP    92 40 0641

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 360 629 (FRAMATOME) <br> * colonne 6, ligne 20 - ligne 27 * <br> * colonne 7, ligne 37 - colonne 8, ligne 25 * <br> * figures 2-3 * <br> --- | 1,6-8 | G21C17/108 |
| A | FR-A-2 573 236 (FRAMATOME) <br> * page 12, ligne 12 - ligne 17 * <br> * page 12, ligne 34 - page 13, ligne 4 * <br> * page 18, ligne 11 - ligne 29 * <br> * figures 3,5-6 * <br> --- | 2-3 | |
| A | FR-A-2 090 232 (LICENTIA PATENT) <br> * page 1, ligne 18 - ligne 33 * <br> * revendication 1; figure * <br> --- | 5 | |
| A | US-A-4 708 844 (KEARTON ET AL.) <br> * colonne 1, ligne 28 - colonne 2, ligne 8 * <br><br> ----- | 9,11 | |

| | DOMAINES TECHNIQUES RECHERCHES (Int. Cl.5 ) |
|---|---|
| | G21C |

Le présent rapport a été établi pour toutes les revendications

| Lieu de la recherche | Date d'achèvement de la recherche | Examinateur |
|---|---|---|
| LA HAYE | 15 JUIN 1992 | CAPOSTAGNO E. |